(19)

Europäisches
Patentamt
European
Patent Office
Office européen
des brevets

(11) **EP 3 038 134 A1**

(12) **EUROPEAN PATENT APPLICATION**

(43) Date of publication:
**29.06.2016 Bulletin 2016/26**

(51) Int Cl.:
**H01J 49/06** (2006.01)

(21) Application number: **15200885.0**

(22) Date of filing: **17.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.12.2014 US 201414581211**

(71) Applicant: **Agilent Technologies, Inc.**
**Santa Clara, CA 95051-7201 (US)**

(72) Inventor: **Williams, Peter T.**
**Santa Clara, CA California 95051-7201 (US)**

(74) Representative: **Zimmermann, Tankred Klaus et al**
**Schoppe, Zimmermann, Stöckeler
Zinkler, Schenk & Partner mbB
Patentanwälte
Radlkoferstrasse 2
81373 München (DE)**

(54) **MULTIPOLE ION GUIDES UTILIZING SEGMENTED AND HELICAL ELECTRODES, AND RELATED SYSTEMS AND METHODS**

(57)     An ion guide (800; 850; 1000) generates a multipole radio frequency (RF) field to radially confine ions to an ion beam along a guide axis as the ions are transmitted through the ion guide. The effective potential of the RF field has a magnitude on the guide axis that is independent of axial position along the guide axis, and presents no potential wells on-axis. The ion guide may include a plurality of axially spaced electrodes (816) partitioned into transversely spaced segments (820). Alternatively, the ion guide may include a plurality of helical electrodes (1016) wound about the guide axis.

FIG. 8A

**Description**

**TECHNICAL FIELD**

The present invention relates to ion guides, including guides, conduits, funnels, collision cells, drift cells, and focusing devices, such as may be utilized in, for example, spectrometers such as mass spectrometers and ion mobility spectrometers.

**BACKGROUND**

A mass spectrometry (MS) system in general includes an ion source for ionizing molecules of a sample of interest, followed by one or more ion processing devices providing various functions, followed by a mass analyzer for separating ions based on their differing mass-to-charge ratios (or m/z ratios, or more simply "masses"), followed by an ion detector at which the mass-sorted ions arrive. An MS analysis produces a mass spectrum, which is a series of peaks indicative of the relative abundances of detected ions as a function of their m/z ratios.

An ion guide is an example of an ion processing device that is often positioned in the process flow between the ion source and the mass analyzer. An ion guide may serve to transport ions through one or more pressure-reducing stages that successively lower the gas pressure down to the very low operating pressure (high vacuum) of the analyzer portion of the system. For this purpose, the ion guide includes multiple electrodes that receive power from a radio frequency (RF) power source. The ion guide electrodes are arranged so as to inscribe an interior (volume) that extends along a central axis from an ion entrance to an ion exit, and has a cross-section in the plane transverse to the axis. The ion guide electrodes are further arranged so as to generate an RF electric field that confines the excursions of the ions in radial directions (in the transverse plane). By this configuration, the ions are focused as an ion beam along the central axis of the ion guide and are transported through the ion guide with minimal loss of ions. This may be done in the presence of a gas flow so as to filter neutral gas species such as neutral atoms or molecules from the ion beam. An ion guide may also serve to transport ions through one or more stages wherein the gas pressure is maintained at a substantially constant level, such as in an ion mobility drift chamber or an ion collision cell.

The interior of an ion guide may be filled with a gas such that the ion guide operates at a relatively high (yet still sub-atmospheric) pressure. For example, a gas filled ion guide may be positioned just downstream of the ion source to collect the as-produced ions with as few ion losses as possible. Also, a buffer gas may be introduced into an ion guide under conditions intended to thermalize (reduce the kinetic energy of) the ions, or to fragment the ions by collision induced dissociation (CID). At relatively high levels of vacuum, the motions of ions are relatively easy to control. On the other hand, at elevated pressures collisions with gas molecules increasingly dominate the behavior of ion motion, making ion transmission at high efficiency more challenging. *See* Kelly et al., The ion funnel: Theory, implementations, and applications, Mass Spectrom. Rev., 29: 294-312 (2010).

An ion funnel is a type of ion guide in which the ion guide volume surrounded by the electrodes converges in the direction of the ion exit. In a typical configuration, the funnel electrodes are arranged as a series of rings coaxial with the ion guide axis. The ring-shaped electrodes are stacked along the ion guide axis and spaced from each other by small axial gaps. The inside diameters of the ring-shaped electrodes are successively reduced in the direction of the ion exit, thus defining the converging ion guide volume. The ion funnel can be useful for a number of reasons. The RF field applied by the converging geometry can compress the ion beam and increase the efficiency of ion transmission through the funnel exit. The large beam acceptance provided by the funnel entrance can improve ion capture, and the comparatively small beam emittance at the funnel exit can improve ion transfer into a succeeding device and can be closely matched to the size of the inlet of the succeeding device. The ion funnel can operate more effectively at higher pressures than a straight cylindrical ion guide. Thus, for instance, the ion funnel is useful for collecting ions emitted from an ion source without being impaired by large gas flows that may occur in the upstream region of the MS system. Also, as the ring electrodes are distributed in the axial direction and are able to be individually coupled to direct current (DC) circuitry, the ring electrodes can be directly utilized to generate a DC gradient along the ion guide axis to assist in keeping ions moving forward.

However, the effective potential (or "pseudo-potential") of the RF field in ion funnels and other ion guides of stacked-ring geometry is non-zero on-axis (on the axis of symmetry). Instead, the effective potential forms a series of zeros or wells along the axis of symmetry. In practice, this is not much of a problem for higher-mass ions, but for low-mass ions these wells become problematic because they hinder the passage of the low-mass ions through the ion funnel. As a result, it is difficult to design an ion funnel that will work well for low-mass ions such as, for example, the lithium ion Li+ (m/z = 7) commonly encountered in inductively coupled plasma-mass spectrometry (ICP-MS).

Therefore, it would be desirable to provide ion guides, including ion funnels, which avoid potential wells on-axis (i.e., on the central axis of the ion guide).

## SUMMARY

To address the foregoing problems, in whole or in part, and/or other problems that may have been observed by persons skilled in the art, the present disclosure provides methods, processes, systems, apparatus, instruments, and/or devices, as described by way of example in implementations set forth below.

According to one embodiment, an ion guide includes: an entrance end; an exit end at a distance from the entrance end along a guide axis; and a plurality of guide electrodes surrounding the guide axis and configured for generating a radio frequency (RF) field of azimuthal 2Nth order wherein N is an integer equal to or greater than 2, and wherein the RF field is effective for radially confining ions to an ion beam along the guide axis, and the RF field has an effective potential having a magnitude on the guide axis that is independent of axial position along the guide axis.

According to another embodiment, an ion guide includes: an entrance end; an exit end at a distance from the entrance end along a guide axis; and a plurality of guide electrodes surrounding the guide axis and axially spaced from each other along the guide axis from the entrance end to the exit end, each guide electrode comprising 2N segments where N is an integer equal to or greater than 2, wherein the segments of each guide electrode are spaced from each other around the guide axis by transverse gaps.

According to another embodiment, an ion guide includes: an entrance end; an exit end at a distance from the entrance end along a guide axis; a plurality of helical electrodes, each helical electrode comprising a first electrode end and a second electrode end, and extending from the first electrode end to the second electrode end through a plurality of turns surrounding the guide axis, wherein: the plurality of helical electrodes is 2N, where N is an integer equal to or greater than 2; the first electrode end of at least one of the helical electrodes is positioned at the entrance end; and the second electrode end of at least one of the helical electrodes is positioned at the exit end.

According to another embodiment, a spectrometer includes: an ion guide according to any of the embodiments disclosed herein; and one or more of the following: an ion detector downstream from the ion guide, an ion source upstream of the ion guide, a mass analyzer downstream or upstream from the ion guide, an ion mobility drift cell downstream or upstream from the ion guide, an ion mobility drift cell comprising the ion guide, and/or an RF voltage source configured for applying an RF voltage to the electrodes effective for generating the RF field.

According to another embodiment, a method for guiding ions includes: transmitting ions through an ion guide comprising an entrance end, an exit end at a distance from the entrance end along a guide axis, and a plurality of guide electrodes surrounding a guide volume between the entrance end and the exit end; and while transmitting the ions, applying a radio frequency (RF) field of azimuthal 2Nth order to the ions where N is an integer equal to or greater than 2, wherein the RF field radially confines the ions to an ion beam along the guide axis, and an effective potential of the RF field has a magnitude on the guide axis that is independent of axial position along the guide axis.

According to another embodiment, a spectrometer is configured for performing any of the methods disclosed herein.

Other devices, apparatus, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

## BRIEF DESCRIPTION OF THE DRAWINGS

The invention can be better understood by referring to the following figures. The components in the figures are not necessarily to scale, emphasis instead being placed upon illustrating the principles of the invention. In the figures, like reference numerals designate corresponding parts throughout the different views.

Figure 1 is a plot of effective potential in a conical ion funnel on axis (r = 0 mm) as a function of axial position z.

Figure 2 is a schematic view of an ion guide having a known stacked-ring configuration.

Figure 3 is a set of representations of the wells of effective potential of an ion funnel, showing iso-potential surfaces for three different values of the effective potential or quasi-potential $V^*$, generated by modeling software.

Figure 4 is a set of plots of the first four modified Bessel functions, starting with the $0^{th}$ modified Bessel function.

Figure 5 is a plot of the electric field vectors for the lowest-order approximation to a cylindrical straight section of the ion funnel, corresponding to Equation 1.4 set forth below, as viewed in a plane perpendicular to the axis of symmetry.

Figure 6 shows a simulated RF field of the straight section of an ion funnel.

Figure 7 is a model of the iso-surface of effective potential for the electrostatic potential described by Equation 1.6 set forth below, with the funnel axis being oriented top-to-bottom.

Figure 8A is a perspective view of an example of an ion guide according to some embodiments.

Figure 8B is another perspective view of the ion guide illustrated in Figures 8A, with DC electrodes added.

Figure 8C is a cross-sectional side (length-wise) view of an example of an ion guide according to other embodiments.

Figure 9 illustrates two perspective views of three iso-surfaces of the effective potential for one sector of a segmented ion conduit or ion funnel as illustrated in Figures 8A and 8B or 8C.

Figure 10 is a perspective view of an example of an ion guide according to other embodiments.

Figure 11 is a model of the iso-surface of the effective potential defined by Equation 1.8 set forth below.

Figure 12 illustrates a ninety-degree section of a helical electrode arrangement according to some embodiments.

Figure 13 is a plot of the iso-surfaces of the log of the effective potential for a helical electrode arrangement according to some embodiments.

Figure 14 is a schematic view of an example of a mass spectrometer (MS) or mass spectrometry (MS) system according to some embodiments.

## DETAILED DESCRIPTION

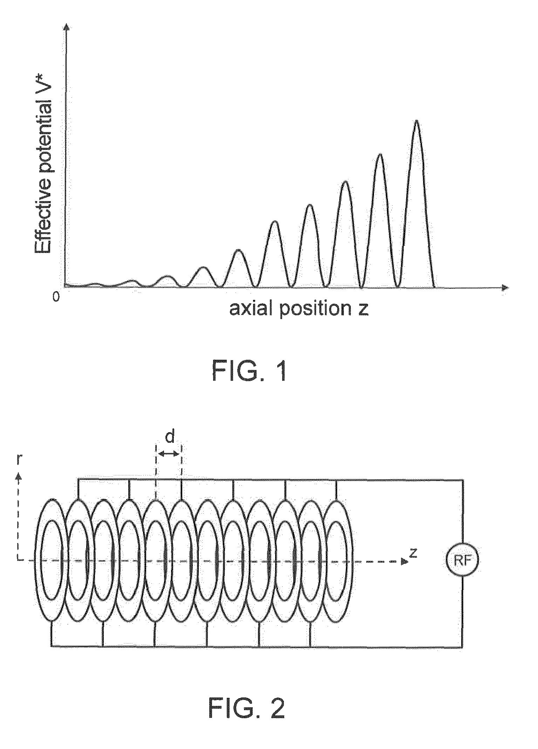

As noted above, in a conventional ion funnel the effective potential (also known as quasi-potential or pseudo-potential) of the radio frequency (RF) field utilized to radially confine ions is not zero, but rather forms a series of potential wells along the central axis of the ion funnel. To illustrate an example of axially distributed potential wells, Figure 1 is a plot of effective potential in a conical ion funnel on axis (r = 0 mm) as a function of axial position z. In a converging ion funnel, the depth of the potential wells increases in the direction of the convergence, as shown.

At sufficiently high RF frequency $f = \omega/2\pi$, ions in vacuum undergo harmonic oscillations superposed on longer-term secular motion. The secular motion can be found using an effective potential $V^*$ (in volts):

$$V^* = (m/z)^{-1} \frac{e|E|^2}{4\omega^2}, \tag{1.1}$$

where $m/z$ is the mass-to-charge ratio of an ion, $e$ is elementary charge (in coulombs), $E$ is the magnitude (strength) of the local RF electric field (in V/m), and $\omega$ is the RF angular frequency (in radians per second), i.e., $\omega = 2nf$ where $f$ is the RF frequency. It will be noted that in the presence of gas, such as in a high-pressure ion funnel, this motion is damped and/or has a stochastic component to it. Consequently, the depth of effective potential wells should be compared with, among other things, the thermal energy $k_B T_{gas}$ ($k_B$ = Boltzmann's constant, $T_{gas}$ = gas temperature) and the energy gained between collisions.

The origin of the on-axis wells in the effective potential may be understood by considering an ion guide of stacked-ring configuration, as shown in Figure 2, reproduced from above-referenced Kelly et al. (2010). The stacked-ring ion guide, from which the ion funnel is derived, includes a series of ring-shaped electrodes separated by an axial spacing $d$. As illustrated, the RF drive voltage is applied to each electrode is 180 degrees out-of-phase with the electrodes adjacent to that electrode. The effective potential for the stacked-ring ion guide may be expressed as:

$$V^*(R, z) = V_{trap} \left[ I_1^2 \left( \tilde{R} \right) cos^2 \tilde{z} + I_0^2 \left( \tilde{R} \right) sin^2 \tilde{z} \right], \tag{1.2}$$

where $\tilde{R} = \pi R/\delta$, $\delta$ is the plate (or ring) spacing, $\tilde{z} = \pi z/\delta$, and $I_0$ and $I_1$ are modified Bessel functions. The coefficient $V_{trap}$ is the axial effective potential well depth and depends on the RF voltage magnitude and frequency, the plate spacing $\delta$, and the diameter of the ring electrodes.

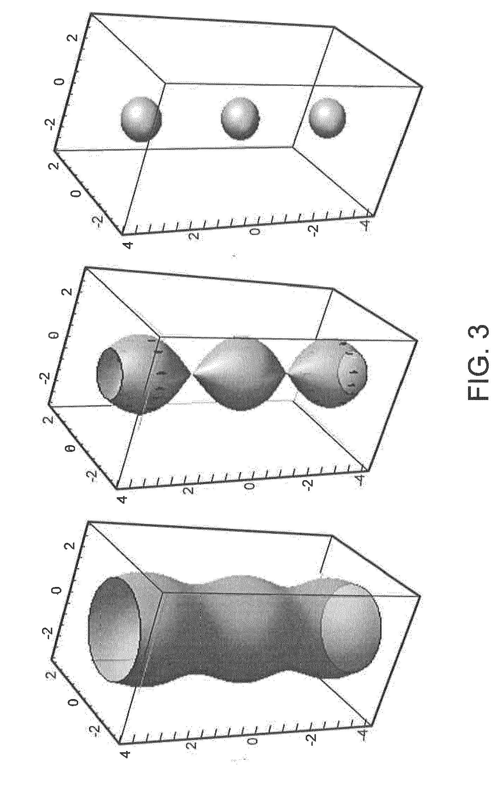

Figure 3 is a set of representations of the wells of effective potential of stacked-ring ion guide, showing iso-potential surfaces for three different values of $V^*$, generated by modeling software. The axis of symmetry of the guide is oriented from top to bottom instead of left to right.

It becomes evident that Equation 1.2 does not describe the full effective potential for the stacked-ring configuration, but instead is just the lowest-order approximation to the effective potential at small scaled radii $\tilde{R}$. With this in mind (and noting that because this is a quasi-electrostatic problem, the potential is complex instead of real), it is assumed the RF field potential $V$ can be written as:

$$V(R, \theta, z) e^{-i\omega t}. \tag{1.3}$$

Assuming axisymmetry and that $V \propto cos(\tilde{z})$ for some scaled $z$, then solving the Laplace equation and scaling $R$ by the same factor as $z$, the potential $V$ can be expressed as:

$$V(R, \theta, z) = V_0 \, I_0 \left( \tilde{R} \right) \cos \tilde{z} \, . \tag{1.4}$$

That is, the potential $V$ is proportional to the $0^{th}$ modified Bessel function, up to some proportionality constant $V_o$. From Equation 1.1 the functional form of Equation 1.2 is easily found, recalling that:

$$\frac{d}{dx} I_0(x) = I_1(x) \, . \tag{1.5}$$

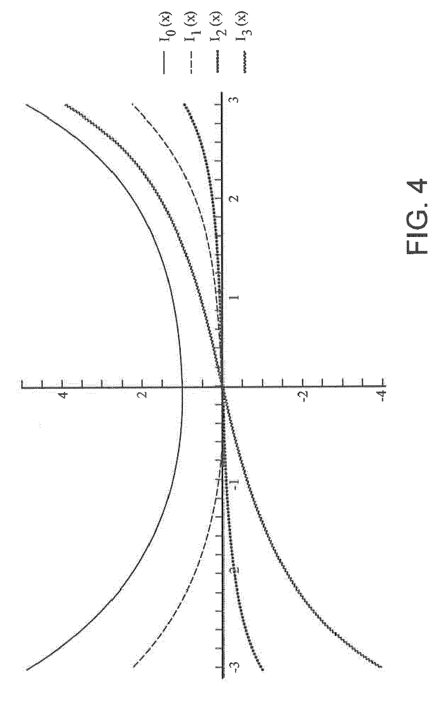

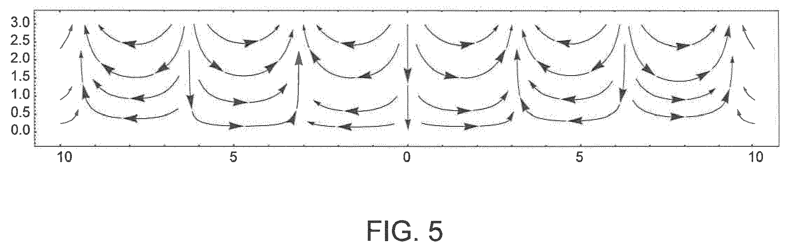

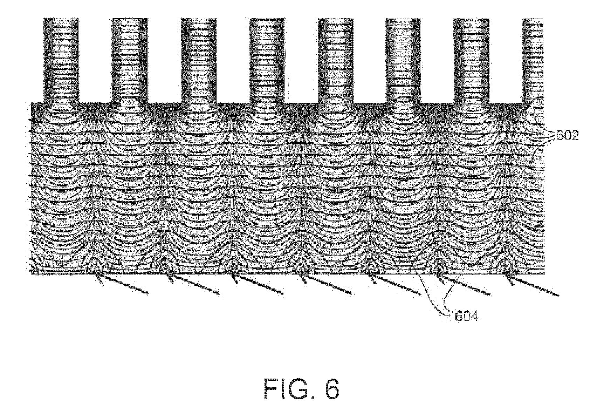

From the foregoing, it becomes evident that the effective potential does not go to zero uniformly along the axis $R = 0$ because the $0^{th}$ modified Bessel function $I_0$, unlike $I_1, I_2, I_3$ et seq., does not go to zero on the axis $R = 0$. This is illustrated in Figure 4, which is a set of plots of the first four modified Bessel functions $I_0(x)$, $I_l(x)$, $I_2(x)$, and $I_3(x)$. This is an inevitable consequence of Gauss's law and the fact that alternating potentials are applied to the plates. The result is that even on-axis, the electric field never goes to zero except at a few isolated discrete locations, which are the zeros of the effective potential. This is further illustrated in Figure 5, which shows the electric field vectors for the lowest-order approximation to the ion funnel, corresponding to Equation 1.4. The axis is oriented right-to-left. This is also illustrated in Figure 6, which shows a simulated RF field of the straight section of a realistic ion funnel. Specifically, Figure 6 shows a portion of the cross-section of the ring-shaped electrodes, and the upper half of the volume surrounded by the electrodes (from the axis of symmetry at the bottom of Figure 6, and radially upward to the inside surfaces of the electrodes that define their inside diameters). The shading indicates the strength of the quasi-electrostatic (RF) potential. Figure 6 also shows electric field lines 602, and contours 604 of effective potential per Equation 1.1. The arrows in Figure 6 point to wells of the effective potential along the axis of symmetry of the funnel.

According to an aspect of the present disclosure, the problem regarding the potential wells in straight ion guides and converging ion guides (ion funnels) of stacked-ring configuration may be addressed by considering Equation 1.4 as the first term in an infinite series. It is desired to zero out this term and go to higher order, so that the term proportional to $I_0$ can be eliminated. According to an aspect of the present disclosure, this can be done by relaxing the axisymmetry of the electrode geometry. The lowest reasonable order is to let $V$ oc $\cos 2\theta$. Then the RF field potential $V$ may be expressed as:

$$V(R, \theta, z) = V_0 \, I_2 \left( \tilde{R} \right) \cos 2\theta \, \cos \tilde{z} \, . \tag{1.6}$$

It is noted that:

$$2 \frac{d}{dx} I_2(x) = I_1(x) + I_3(x) \, , \tag{1.7}$$

so that when the gradient of Equation 1.6 is taken to obtain the RF field in order to find the effective potential, Equation 1.1, one finds that it is identically zero on-axis.

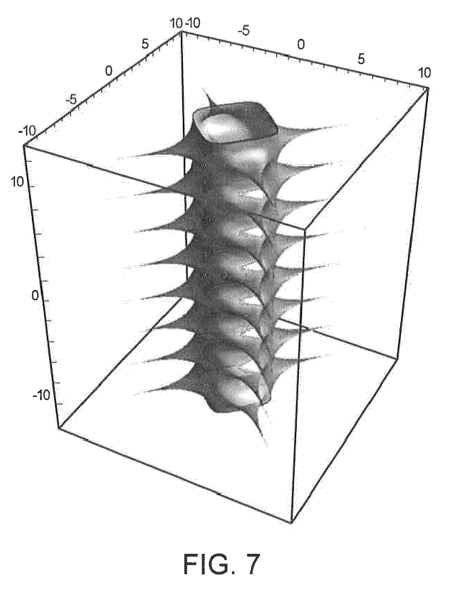

Figure 7 is a model of the iso-surface of effective potential for the electrostatic potential of Equation 1.6, with the guide axis being oriented top-to-bottom. It is observed that new zeros in the effective potential occur at $0 = \pm \, \pi/2$, $\pm \, 3\pi/2$. However, the acceptance of these near-zero areas appears to be rather small (i.e., they appear long and thin), so their effect may be negligible. Moreover, in practice there is an overall bulk gas flow from one end of the ion guide to the other, which may aid in pushing ions along and ensuring they spend little time in any of these spikes. Further, these radial zeros may be blocked by, for example, rods with a DC bias as described below.

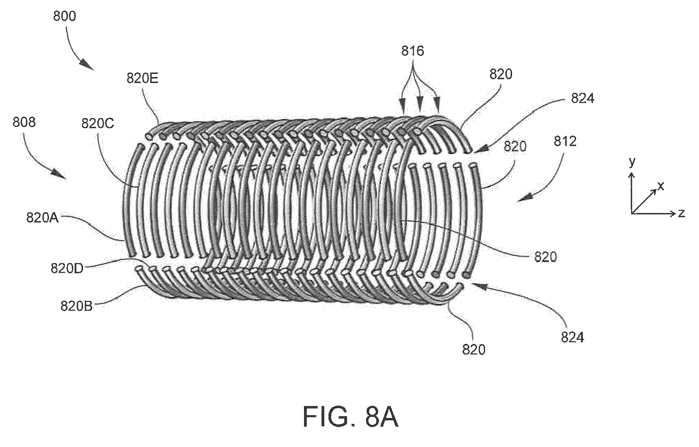

Figure 8A is a perspective view of an example of an ion guide 800 according to some embodiments. In the context of the present disclosure, the term "ion guide" generally encompasses any device configured for constraining ion motion such that ions primarily occupy a region along the axis of the ion guide as a cloud or beam. The term "ion guide" may encompass any one of specific classes of ion guides such as funnels, straight conduits, and other ion focusing devices.

The ion guide 800 is configured for generating zero effective potential on-axis (without potential wells on-axis) in accordance with Equation 1.6. The ion guide 800 generally has a length along a longitudinal axis (or the "ion guide axis"), and a transverse cross-section in the transverse plane orthogonal to the ion guide axis. The geometry of the ion guide 800 generally may be symmetrical about the ion guide axis, in which case the ion guide axis may be considered to be a central axis or axis of symmetry. For reference purposes, Figure 8A provides a Cartesian coordinate system in which the z-axis corresponds to the ion guide axis whereby the cross-section of the ion guide 800 lies in the transverse x-y plane. From the perspective of Figure 8A, resultant ion travel is directed from the left to the right generally along the ion guide axis which may be considered as the ion optical axis.

The ion guide 800 generally includes an ion entrance end 808, an ion exit end 812 disposed at a distance from the ion entrance end 808 along the ion guide axis, and a plurality of ion guide electrodes 816 surrounding the guide axis and thereby surrounding an ion guide volume extending from the ion entrance end 808 to the ion exit end 812. In practice, a housing (not shown) encloses the ion guide 800 to provide a pressure-controlled operating environment. Ions are received at the ion entrance end 808 from an upstream device such as, for example, an ion source, an upstream ion guide, an ion trap, a mass filter, an ion fragmentation device, an ion mobility (IM) drift cell, single or multiple orifices or capillaries, etc. For this purpose, a gas conductance limiting aperture (e.g., a skimmer plate) may be positioned on the ion guide axis just upstream of the ion entrance end 808 which assists in preventing unwanted neutral molecules from entering the ion guide 800 as appreciated by persons skilled in the art. Ion optics may also positioned upstream of the ion entrance end 808 to assist in transferring ions into the ion entrance end 808. Ions are emitted from the ion exit end 812 into a downstream device such as, for example, a downstream ion guide, an ion trap, a mass filter, an ion fragmentation device, an ion beam cooler, an IM drift cell, a mass analyzer, etc. For this purpose, the ion exit end 812 may likewise include a gas conductance limiting aperture on the ion guide axis and may further include associated ion optics.

The ion guide 800 is configured for radially confining ions to an ion beam concentrated along the ion guide axis. That is, the ion guide 800 is configured for constraining the motions of the ions in the radial directions (in the transverse, x-y plane in Figure 8A) while allowing the ions to flow axially through the ion guide 800. In some embodiments, the ion guide 800 may also be configured for axially accelerating the ions as they travel through the ion guide 800 to prevent stalling and/or, in further embodiments, to facilitate ion fragmentation. Alternatively or additionally, ion optics positioned at (at or proximate to) the ion entrance end 808 and the ion exit end 812 may be configured for this purpose. In some embodiments, the ion guide 800 may be configured for reducing the kinetic energy of the ions, i.e., cooling or "thermalizing" the ions, in which case an inert buffer gas (e.g., nitrogen, argon, etc.) may be utilized in the ion guide 800. In some embodiments entailing tandem mass spectrometry, the ion guide 800 may be configured for fragmenting the (precursor, or "parent") ions to produce fragment (product, or "daughter") ions, in which case an inert buffer gas (e.g., nitrogen, argon, etc.) may be utilized in the ion guide 800 at a pressure appropriate for collision induced dissociation (CID). In some embodiments entailing IM spectrometry, the ion guide 800 may be configured for use as an ion mobility drift cell, in which case an inert buffer gas may be utilized in the ion guide 800 at a pressure and temperature appropriate for measuring ion drift time through the ion guide 800.

To radially confine ions, the ion guide electrodes 816 are configured for generating a three-dimensional, multipole RF radial confining field of Nth azimuthal order, where N is an integer equal to or greater than 2. Examples of Nth order RF fields include, but are not limited to, quadrupole (N = 2), hexapole (N = 3), and octopole (N = 4) fields, as well as even higher-order field as appreciated by persons skilled in the art. Moreover, as taught herein the effective potential of the RF radial confining field on-axis is independent of axial position. In the present embodiment, these characteristics are realized by the ion guide electrodes 816 having a stacked-ring configuration and, further, a segmented-ring configuration. Specifically, the ion guide electrodes 816 are ring-shaped in the transverse plane and surround the ion guide axis, and are axially spaced from each other along the ion guide axis. Further, each ion guide electrode 816 is split into a plurality of electrode segments 820 spaced from each other around the guide axis. Thus, each segment is spaced from an adjacent segment of the same electrode, for example segments 820A and 820B, by a transverse gap 824. Moreover, each segment of a given electrode is spaced from an adjacent segment of an axially adjacent electrode by the axial gap between the two electrodes. For example, segment 820A of the first electrode in the series is axially spaced from segment 820C of the second electrode, segment 820B of the first electrode in the series is axially spaced from segment 820D of the second electrode, etc. The number of electrode segments 820 comprising each ion guide electrode 816 is 2N, where N is an integer equal to or greater than 2. In the illustrated embodiment, N = 2, i.e., each ion guide electrode 816 includes four electrode segments 820, hence forming a quadrupole electrode arrangement. In other embodiments, the electrodes 820 may be segmented into a greater number of electrode segments 820 to generate higher-order RF fields, for example, six segments for a hexapole field, eight segments for an octopole field, etc.

In the illustrated embodiment, the electrode segments 820 are curved (arc-shaped) and, more specifically, are oriented convex-out relative to the guide axis (curved away from the guide axis). In this embodiment, the transverse gaps 824 are circumferential (arcuate) gaps, and the guide volume surrounded by the ion guide electrodes 816 has a round (circular, elliptical, etc.) cross-section in the transverse plane. In other embodiments, the electrode segments 820 may be curved (arc-shaped) but oriented convex-in relative to the guide axis (curved toward the guide axis), such that the guide volume surrounded by the ion guide electrodes 816 has a hyperbolic (or pseudo-hyperbolic) cross-section in the transverse plane. In still other embodiments, the electrode segments 820 may be straight and oriented along lines orthogonal to radial directions from the guide axis, such that the ion guide electrodes 816 are polygonal "rings" and the guide volume surrounded by the ion guide electrodes 816 has a polygonal cross-section in the transverse plane.

The electrode segments 820 may be precisely fixed in position in the ion guide 800 utilizing appropriate mounting hardware such as electrically insulating mounting features. In a typical yet non-limiting embodiment, the angular positions of the electrode segments 820 of each electrode 820 are the same as the angular positions of the electrode segments 820 of the other electrodes 820, as illustrated.

The ion guide 800 also includes an RF voltage source configured for applying an RF voltage of desired parameters (RF drive frequency $f = \omega / 2\pi$, amplitude $V_{RF}$, and phase $\varphi$) to generate the RF radial confining field along the length of the ion guide 800. According to the present teachings, the RF voltage source communicates with each electrode segment 820 of each ion guide electrode 816, via suitable circuitry as appreciated by persons skilled in the art. That is, each electrode segment 820 is independently addressable by the RF voltage source. By this configuration, the RF voltage source alternately applies a first RF voltage and a second RF voltage to adjacent electrode segments 820. The first RF voltage and the second RF voltage are out of phase with each other, typically by 180 degrees. The first RF voltage and the second RF voltage are alternately applied to both axially adjacent and transversely (e.g., circumferentially, azimuthally) adjacent electrode segments 820. Thus in Figure 8A, for example, assuming the first RF voltage is applied to the electrode segment 820A of the first (leftmost) electrode, the second RF voltage is applied to the adjacent electrode segments 820B and 820E of the first electrode, and the second RF voltage is also applied to the adjacent electrode segment 820C of the second (axially adjacent) electrode. The alternating application of the two out of phase RF voltages is continued around each electrode segment 820 and along the axial series of electrodes 816.

Additionally or alternatively in the case that, for example, $N = 3$, $N = 4$, or $N = 5$, the 2N electrode segments 820 of each ion guide electrode 816 may be driven by a first RF voltage to a segment 820, a second RF voltage to an azimuthally adjacent segment 820, and so on to an Nth RF voltage, where the first RF voltage, second RF voltage, and on to the Nth RF voltage are all respectively out of phase with each other by 360/N degrees, e.g. 120 degrees for N = 3, 90 degrees for N=4, and 72 degrees for N=5, etc. Also, in such case, axially adjacent electrode segments 820, e.g. 820A and 820C, are also driven by RF voltages that are out of phase with each other either by 180 degrees or by 360/N degrees.

It will be noted that because an RF signal is applied to each electrode segment 820, each electrode segment 820 itself may be characterized as an electrode. The term "segment" is employed to convey that a group of electrode segments 820 at the same axial position forms a split-ring structure, which herein is termed an "electrode" 816. In other words, each electrode 816 is made up of multiple electrodes (electrode segments 820) separated by circumferential gaps 824.

The ion guide 800 may also include a DC voltage source communicating with the electrode segments 820. The DC voltage source may apply a DC voltage $V_{DC}$ to the electrode segments 820 in a manner that generates an axial DC potential gradient, thereby ensuring that ions continue to drift in the forward direction, even after losing kinetic energy to multiple collisions with a buffer gas when utilized in some embodiments. Typically, the same DC magnitude is applied to the electrode segments 820 of the same electrode 816, although in other embodiments non-equal DC magnitudes may be applied to the electrode segments 820 of the same electrode 816.

In the embodiment specifically illustrated in Figure 8A, the respective inside diameters of the ion guide electrodes 816 remain constant along the guide axis from the ion entrance end 808 to the ion exit end 812. This type of ion guide may be referred to herein as an ion "conduit."

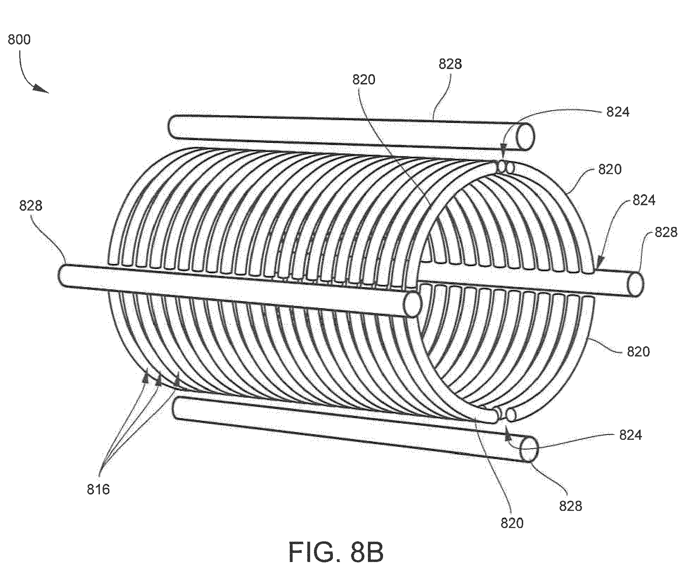

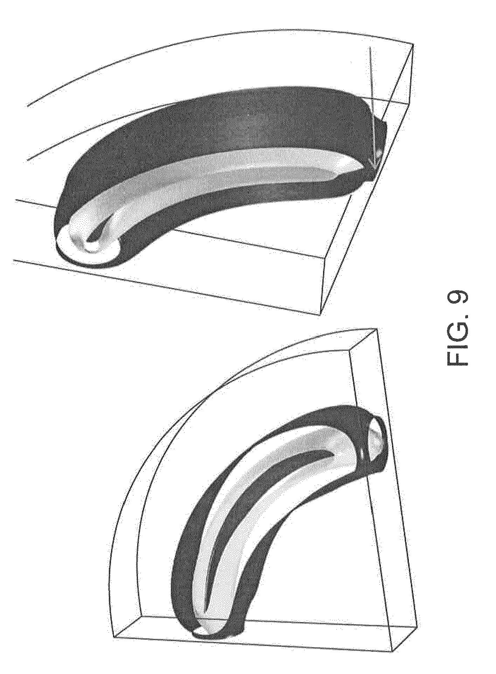

Figure 8B is another perspective view of the ion guide 800 illustrated in Figures 8A. Figure 8B illustrates that the ion guide 800 may further include a plurality of axially elongated electrodes (or rods) 828, i.e., electrodes parallel with the guide axis. The elongated electrodes 828 may have circular cross-sections as illustrated, or any other rounded cross-sections or polygonal cross-sections. The elongated electrodes 828 are positioned at a greater radial distance from the guide axis than the guide electrodes 816, i.e., the elongated electrodes 828 are positioned "outside" of the guide electrodes 816. DC potentials may be applied to the elongated electrodes 828 for various purposes, and thus the elongated electrodes 828 may also be referred to as "DC electrodes." In the illustrated embodiment, the elongated electrodes 828 are positioned in radial alignment with the circumferential gaps 824 between the electrode segments 820. By this configuration, the elongated electrodes 828 operating with a DC bias may aid in eliminating ion leakage through "holes" in the effective potential, as described below in conjunction with Figure 9.

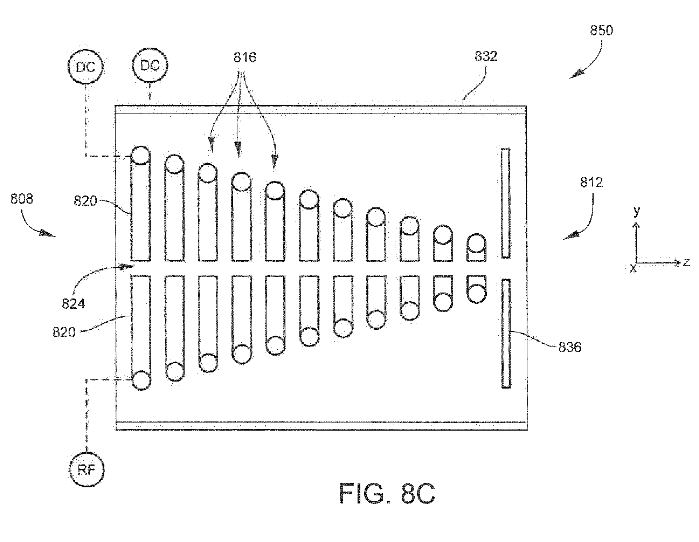

Figure 8C is a cross-sectional side (length-wise) view of an example of an ion guide 850 according to other embodiments. The ion guide 850 is similar in configuration to the ion guide 800 described above and illustrated in Figures 8A and 8B, and thus is configured for generating zero effective potential on-axis (without potential wells on-axis) in accordance with Equation 1.6. The ion guide 800 generally includes an ion entrance end 808, an ion exit end 812 disposed at a distance from the ion entrance end 808 along the ion guide axis, and a plurality of ion guide electrodes 816 surrounding the guide axis and thereby surrounding an ion guide volume extending from the ion entrance end 808 to the ion exit end 812. A housing (not shown) may enclose the ion guide 800 as noted above. As in the case of the ion guide 800 of Figures 8A and 8B, the ion guide electrodes 816 of the converging ion guide 850 are partitioned into electrode segments 820. As in other embodiments, each ion guide electrode 816 includes four or more electrode segments 820. In Figure 8C the ion guide electrodes 816 are arbitrarily oriented such that for each ion guide electrode 816, Figure 8C shows only two electrode segments 820 and only one circumferential gap 824 (visible in the y-z plane, at a radial distance along the x-axis directed into the drawing sheet).

In addition, the ion guide 850 is also configured for concentrating the ion beam, i.e., converging the volume occupied by the ion phase space. By this configuration, the ion beam has a relatively large beam acceptance (admittance) at the ion entrance end 808 that maximizes ion collection from the preceding ion processing device, and has a relatively small beam emittance at the ion exit end 812 that maximizes ion transmission into the succeeding ion processing device. As a result, the ion guide 850 is configured for transmitting ions through the ion guide 850 in a manner that minimizes loss of ions. In the illustrated embodiment, these characteristics are achieved by the ion guide electrodes 816 having respective inside diameters that are successively reduced along the guide axis from the ion entrance end 808 to the ion exit end 812, such that the guide volume surrounded by the ion guide electrodes 816 converges in a direction toward the ion exit end 812. The ion guide 850 may thus be characterized as an ion funnel.

Figure 8C also illustrates a schematic depiction of an RF source and a DC source placed in electrical communication with the ion guide electrodes 816. It is understood that each electrode 816 may individually receive an RF signal and a DC signal via appropriate circuitry, with adjacent electrodes 816 receiving RF signals of opposite polarity as described above.

Figure 8C also illustrates that the ion guide 850 may be surrounded by an electrically conductive shroud 832 to which a DC voltage may be applied. The conductive shroud 832 may be a solid cylindrical wall, or a cylindrical wall having a pattern of holes to facilitate gas flow, or a mesh. The conductive shroud 832 may be shaped as a straight cylinder, or as a cone with a taper angle (angle of convergence) being the same or different as that defined by the arrangement of ion guide electrodes 816. Additionally or alternatively, the ion guide 850 may include the above-described DC-biased elongated electrodes 828 (Figure 8B). The elongated electrodes 828 may be parallel with the guide axis as in Figure 8B, or oriented at a taper angle (angle of convergence) that is the same as or different from that of the ion guide electrodes 816 in Figure 8C as needed to achieve a desired effect on the electrical field in the guide volume. Similarly, the conductive shroud 832 may be included with the ion guide 800 of Figure 8A or 8B.

Figure 8C further illustrates a DC-only conductance limiting aperture 836 (a plate with an aperture on-axis) positioned at the ion exit end 812 after the final ion guide electrode 816. The inside diameter of the conductance limiting aperture 836 may be less than that of the final ion guide electrode 816. Similarly, the conductance limiting aperture 836 may be included with the ion guide 800 of Figure 8A.

In other embodiments, an ion guide of segmented-ring geometry comprises one or more straight cylindrical sections and one or more funnel sections. As one example, the ion guide may include a straight cylindrical section upstream and/or downstream of a funnel section. The straight cylindrical section(s) may be configured as described above in conjunction with the ion guide 800 and Figures 8A and 8B, while the funnel section(s) may be configured as described above in conjunction with the ion guide 850 and Figure 8C. In some embodiments, the ion guide may include a diverging section, i.e., a funnel that diverges in the direction of ion flow. In some embodiments the ion guide is constructed to allow neutral species such as gas atoms and molecules to escape radially, thus filtering out neutral species from the ion beam.

Figure 9 illustrates two perspective views of three iso-surfaces of the effective potential for one sector of a segmented ion conduit or ion funnel as described above in conjunction with Figures 8A and 8B or 8C. At arbitrarily low values for the effective potential, there may exist "holes," one of which is pointed out by an arrow in Figure 9. Such holes might allow ions to leak out from the ion guide 800 or 850. However, in practice over the wide range of operating parameters contemplated, any such ion leakage may be negligible. Moreover, the use of elongated electrodes 828 (Figure 8B) and/or a conductive shroud 832 (Figure 8C) with a DC voltage applied thereto may eliminate any such ion leakage.

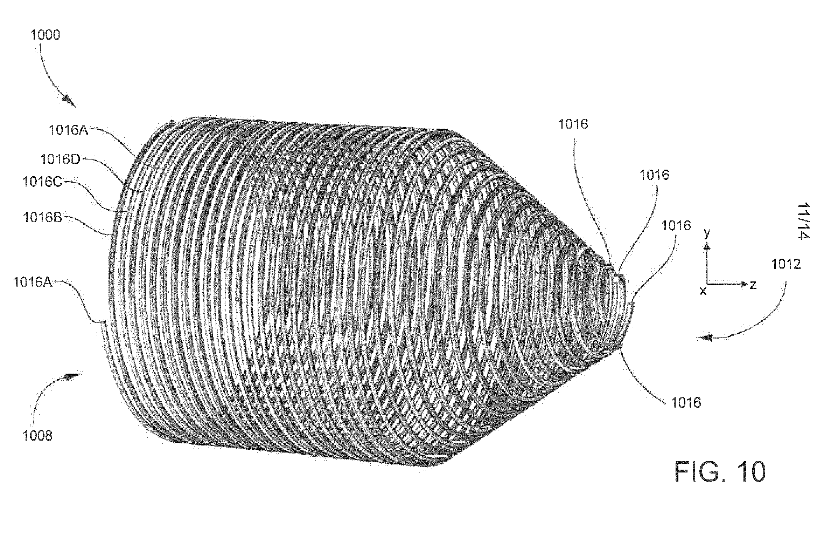

Figure 10 is a perspective view of an example of an ion guide 1000 according to other embodiments. The ion guide 1000 is configured for generating an RF confining field having a zero effective potential on-axis (without potential wells on-axis). As described above, in some embodiments the ion guide 1000 may also be configured for additional functions, such as axially accelerating the ions, thermalizing the ions, and/or fragmenting the ions. The ion guide 1000 generally has a length along the ion guide axis (z-axis), and a transverse cross-section in the transverse (x-y) plane orthogonal to the ion guide axis. The geometry of the ion guide 1000 may generally be symmetrical about the ion guide axis. From the perspective of Figure 10, resultant ion travel is directed from the left to the right generally along the ion guide axis which may be considered as the ion optical axis.

The ion guide 1000 generally includes an ion entrance end 1008, an ion exit end 1012 disposed at a distance from the ion entrance end 1008 along the ion guide axis, and a plurality of ion guide electrodes 1016 surrounding the guide axis and thereby surrounding an ion guide volume extending from the ion entrance end 1008 to the ion exit end 1012. A housing (not shown) may enclose the ion guide 1000 as noted above. The ion guide 1000 may also include a conductive shroud 832 and a conductance limiting aperture 836 as described above.

As in other embodiments, the ion guide 1000 is configured for generating a two-dimensional, multipole RF radial confining field to radially confine ions to an ion beam concentrated along the ion guide axis. Moreover, the effective potential of the RF radial confining field on-axis is independent of axial position. In the present embodiment, these characteristics are realized by the ion guide electrodes 1016 being helical, i.e., helically wound about the ion guide axis. The number of electrodes 1016 is 2N, where N is an integer equal to or greater than 2. In the illustrated embodiment, N = 2, i.e., four electrodes 1016 are provided, hence forming a quadrupole electrode arrangement. In other embodiments, more than four helical electrodes 1016 may be provided to generate higher-order RF fields, for example, six electrodes for a hexapole field, eight electrodes for an octopole field, etc.

Each electrode 1016 may be considered as being elongated in the manner of a rod or wire, starting at a first electrode end and terminating at a second electrode end, which is arranged as a helix or spiral whereby the electrode 1016 presents a number of turns about the ion guide axis. In other words, each electrode 1016 extends from the first electrode end to the second electrode end through a plurality of turns surrounding the ion guide axis. The electrodes 1016 may be arranged such that the first electrode end of at least one of the electrodes 1016 is positioned at the ion entrance end 1008, and the second electrode end of at least one of the electrodes 1016 is positioned at the ion exit end 1012. The respective first electrode ends of the electrodes 1016, and the respective second electrode ends of the electrodes 1016, may be spaced from each other at equal angular position intervals relative to the ion guide axis. Thus, in the illustrated embodiment with a quadrupole arrangement, the first electrode ends and second electrode ends are spaced at ninety degrees from each other. The electrodes 1016 may be precisely fixed in position in the ion guide 1000 utilizing appropriate mounting hardware as appreciated by persons skilled in the art.

For each electrode 1016, a given turn follows a helical path around the guide axis and, after one revolution of 360 degrees, transitions into the next, adjacent turn. For each electrode 1016, adjacent turns are separated by a lead spacing along the guide axis. That is, the lead spacing is the axial distance between two adjacent turns of the same electrode. In the illustrated embodiment, the electrodes 1016 are interleaved such that the lead spacing of each electrode 1016 contains a turn of each of the other electrodes 1016. This is illustrated in Figure 10 at the at the ion entrance end 1008 in the case of four electrodes 1016: a first electrode 1016A, a second electrode 1016B, a third electrode 1016C, and a fourth electrode 1016D. The first turn of the first electrode 1016A is adjacent to the first turn of the second electrode 1016B, which is adjacent to the first turn of the third electrode 1016C, which is adjacent to the first turn of the fourth electrode 1016D. This sequence is continued for the remaining portion of the set of electrodes 1016. Thus, one turn of each of the second electrode 1016B, third electrode 1016C, and fourth electrode 1016D is located within each lead spacing of the first electrode 1016A.

In addition to lead spacing, the pitch of the electrodes 1016 may be defined as the axial distance between any two directly adjacent turns, for example, between the first turn of the first electrode 1016A and the first turn of the second electrode 1016B, between the first turn of the second electrode 1016B and the first turn of the third electrode 1016C, between the first turn of the third electrode 1016C and the first turn of the fourth electrode 1016D, etc. In some embodiments, the pitch is constant (or substantially constant) along the guide axis from the ion entrance end 1008 to the ion exit end 1012, i.e., the turns are spaced at equal intervals throughout the entire axial length of the set of electrodes 1016. In other embodiments, the pitch may vary (e.g., may progressively increase or decrease) along the guide axis from the ion entrance end 1008 to the ion exit end 1012.

The ion guide 1000 also includes an RF voltage source configured for applying an RF voltage of desired parameters (RF drive frequency $f = \omega/2\pi$, amplitude $V_{RF}$, and phase $\varphi$) to generate the RF radial confining field along the length of the ion guide 1000. According to the present teachings, the RF voltage source communicates with each of the helical electrodes 1016, via suitable circuitry as appreciated by persons skilled in the art. The RF voltage source alternately applies a first RF voltage and a second RF voltage to adjacent electrodes 1016. As noted above, the first RF voltage and the second RF voltage are out of phase with each other, typically by 180 degrees. Thus in Figure 10, for example, assuming the "first" RF voltage is applied to the first electrode 1016A, the "second" RF voltage is applied to the second electrode 1016B, the first RF voltage is applied to the third electrode 1016C, and the second RF voltage is applied to the fourth electrode 1016D. Thus, the RF voltage alternates from the first phase ($\varphi$) to the second phase ($\varphi - \pi$) from one turn to an adjacent turn along the ion guide axis.

Additionally or alternatively in the case that, for example, $N = 2$, $N = 4$, or $N = 6$, the N helical electrodes 1016 may be driven by a first RF voltage to an electrode 1016A, a second RF voltage to an adjacent electrode 1016B, a third RF voltage to an electrode 1016C adjacent to the electrode 1016B, and so on to an Nth RF voltage, where the first RF voltage, second RF voltage, and on to the Nth RF voltage are all respectively out of phase with each other by 360/N degrees, e.g. 90 degrees for N = 4, and 60 degrees for N = 6, etc.

The ion guide 1000 may also include a DC voltage source communicating with the electrodes 1016. The DC voltage source may apply a DC voltage $V_{DC}$ to the electrodes 1016 in a manner that generates an axial DC potential gradient, thereby ensuring that ions continue to drift in the forward direction, even after losing kinetic energy to multiple collisions with a buffer gas when utilized in some embodiments. Alternatively, a DC potential may be applied to ion optics at the ion entrance end 1008 and the ion exit end 1012, or to a conductive shroud 832 surrounding the electrodes 1016 as described above.

In the illustrated embodiment, the ion guide 1000 includes a cylindrical section that transitions to a funnel section. In the cylindrical section, the turns of the helical electrodes have respective inside diameters that are substantially constant along the guide axis, while in the funnel section the turns of the helical electrodes have respective inside diameters that are successively reduced along the guide axis in a direction toward the ion exit end 1012. In other embodiments, the ion guide 1000 may include more than one cylindrical section and/or funnel section. In other embodiments, the ion guide 1000 may include a diverging section. In other embodiments, the ion guide 1000 may include only a cylindrical section (i.e., the ion guide 1000 may be an ion conduit), or may include only a funnel section.

In some embodiments, the helical electrodes 1016 may be configured such that at least a portion of the ion guide axis is curved. In still further embodiments, the helical electrodes 1016 may be mounted to a flexible support structure such that the ion guide 1000 is bendable by a user. In such a case, the ion guide 1000 may be referred to as an "ion hose."

The RF field potential $V$ generated by the helical ion guide 1000 for the case N = 2 may be expressed as a variant of Equation 1.6:

$$V(R, \theta, z) = V_0 \, I_2\left(\tilde{R}\right) \exp(i(2\theta - \tilde{z})) \, . \tag{1.8}$$

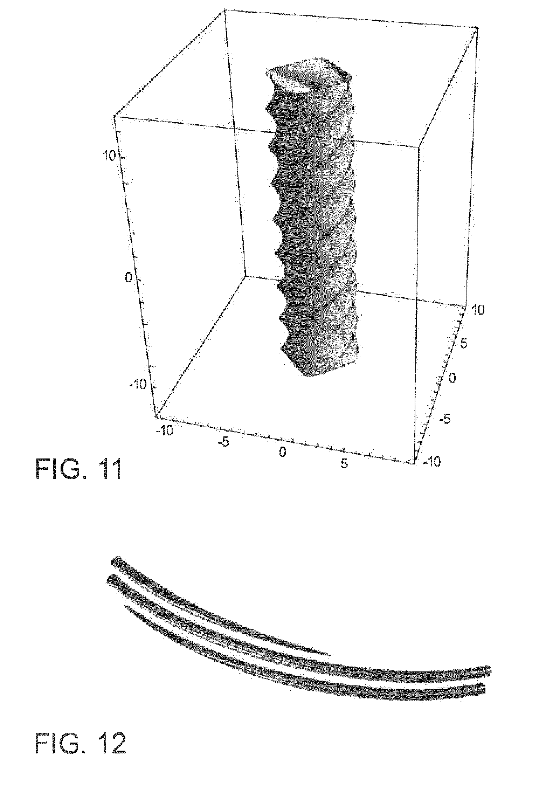

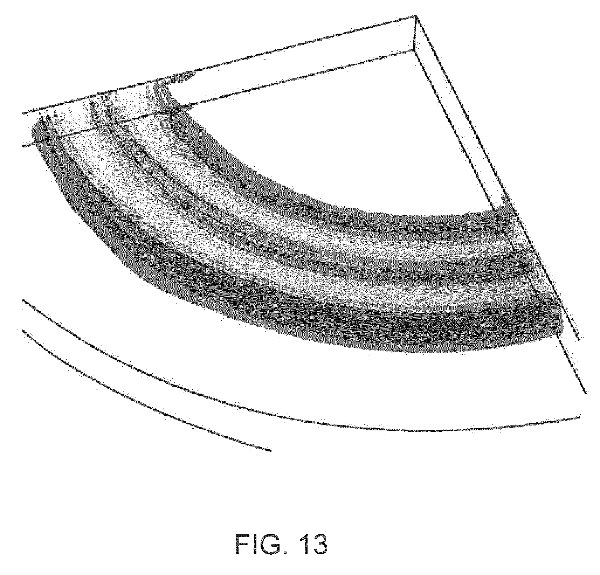

This functional form should represent the lowest-order near-axis approximation to the potential of a quadrupole-helical ion funnel, not counting the convergent "funnel" part of such a structure. Figure 11 is a model of the iso-surface of the effective potential defined by Equation 1.8. Figure 12 is a model simulating a ninety-degree section of the helical electrode arrangement. Figure 13 is a plot of the iso-surfaces of the log of the effective potential for the helical electrode arrangement. The result is a dramatic improvement over both the conventional ion funnel and the segmented electrode configuration illustrated in Figures 8A and 8B. The effective potential forms an almost cylindrical sheath around the interior ion guide volume. Not only does the effective potential go to zero uniformly on-axis, with no potential wells in the effective potential on-axis, but also the ion confinement is improved and holes through which ions might escape are absent. Moreover, the magnitude of the effective potential is constant along the length of the helical ion guide. Thus, the helical ion guide does not have the problem associated with conventional ion funnels in which the RF field is weaker in the wider part of the ion funnel such that ions may escape in radial directions. Further, the helical ion guide is less sensitive to space-charge effects.

According to other embodiments, a mass spectrometer (or spectrometry system) is provided that includes at least one ion guide configured according at least one of the embodiments disclosed herein. For example, the ion guide may include one or more straight and/or converging geometries, and may include segmented or helical electrodes, as illustrated in Figures 8A, 8B and 10. The spectrometry system may include an ion source, an ion guide downstream from the ion source, one or more ion analyzers downstream and/or upstream from the ion guide, and at least one ion detector operatively associated with the ion analyzer (or final ion analyzer). In some embodiments, the spectrometry system may be or include a mass spectrometer (MS), in which case at least one of the ion analyzers is a mass analyzer. In other embodiments, the spectrometry system may be or include an ion mobility spectrometer (IMS), in which case at least one of the ion analyzers is an IM drift cell. A traveling well ion guide as disclosed herein may be utilized as an IM drift cell. In other embodiments, the spectrometry system may be a hybrid IM-MS system that includes at least one IM drift cell and at least one MS (typically downstream of the IM drift cell).

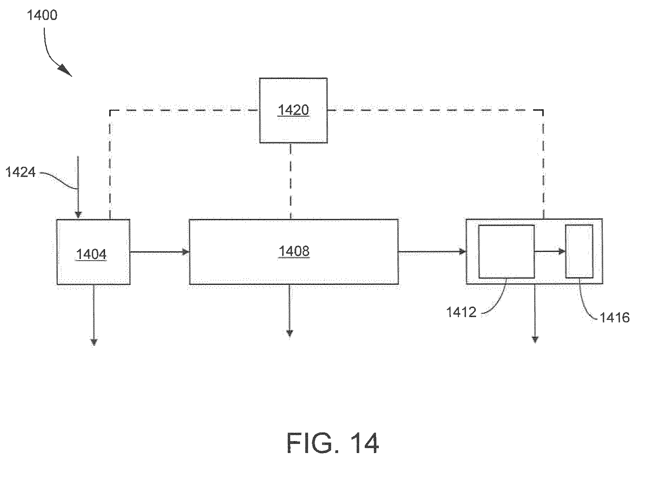

Figure 14 is a schematic view of an example of a mass spectrometer (MS) or mass spectrometry (MS) system 1400 according to some embodiments, which may include one or more ion guides as described herein. The operation and design of various components of mass spectrometry systems are generally known to persons skilled in the art and thus need not be described in detail herein. Instead, certain components are briefly described to facilitate an understanding of the subject matter presently disclosed.

The MS system 1400 may generally include, in serial order of ion process flow, an ion source 1404, an ion processing section 1408, a mass analyzer 1412, an ion detector 1416, and a computing device (or system controller) 1420. From the perspective of Figure 14, overall ion travel through the MS system 1400 is in the direction from left to right as schematically depicted by horizontal arrows. The MS system 1400 also includes a vacuum system for maintaining various interior chambers of the MS system 1400 at controlled, sub-atmospheric pressure levels. The vacuum system is schematically depicted by downward pointing arrows that represent vacuum lines communicating with vacuum or exhaust ports of the chambers, one or more vacuum-generating pumps and associated components appreciated by persons skilled in the art. The vacuum lines may also remove residual non-analytical neutral molecules from the ion path through the MS system 1400.

The ion source 1404 may be any type of continuous-beam or pulsed ion source suitable for producing analyte ions for spectrometry. Examples of ion sources 1404 include, but are not limited to, electron ionization (EI) sources, chemical ionization (CI) sources, photo-ionization (PI) sources, electrospray ionization (ESI) sources, atmospheric pressure chemical ionization (APCI) sources, atmospheric pressure photo-ionization (APPI) sources, field ionization (FI) sources, plasma or corona discharge sources, laser desorption ionization (LDI) sources, and matrix-assisted laser desorption ionization (MALDI) sources. In some embodiments, the ion source 1404 may include two or more ionization devices, which may be of the same type or different type. Depending on the type of ionization implemented, the ion source 1404 may reside in a vacuum chamber or may operate at or near atmospheric pressure. Sample material to be analyzed may be introduced to the ion source 1404 by any suitable means, including hyphenated techniques in which the sample material is an output 1424 of an analytical separation instrument such as, for example, a gas chromatography (GC) or liquid chromatography (LC) instrument (not shown).

The mass analyzer 1412 may generally be any device configured for separating analyte ions on the basis of their different mass-to-charge (m/z) ratios. Examples of mass analyzers include, but are not limited to, TOF analyzers, multipole electrode structures (e.g., quadrupole mass filters, linear ion traps, three-dimensional Paul traps, etc.), electrostatic traps (e.g. Kingdon, Knight and ORBITRAP® traps), and ion cyclotron resonance (ICR) or Penning traps such as utilized in Fourier transform ion cyclotron resonance mass spectrometry (FT-ICR or FTMS). The ion detector 1416 may be any device configured for collecting and measuring the flux (or current) of mass-discriminated ions outputted from the mass analyzer 1412. The ion detector 1416 may also be configured for transmitting ion measurement data to the computing device 1420. Examples of ion detectors include, but are not limited to, multi-channel detectors (e.g., micro-channel plate (MCP) detectors), electron multipliers, photomultipliers, image current detectors, and Faraday cups.

The ion processing section 1408 generally represents an interface (or an intermediate section or region) between the ion source 1404 and the mass analyzer 1412. Generally, the ion processing section 1408 may be considered as being configured for receiving the ions produced by the ion source 1404 and transmitting the ions to the mass analyzer 1412. The ion processing section 1408 may further be configured for performing various ion processing operations prior to transmission into the mass analyzer 1412. For these purposes, the ion processing section 1408 may include one or more components (structures, devices, regions, etc.) positioned between the ion source 1404 and the mass analyzer 1412. These components may serve various functions such as, for example, pressure reduction, neutral gas removal, ion beam focusing/guiding, ion filtering/selection, ion fragmentation, etc. The ion processing section 1408 may include a housing enclosing one or more chambers. Each chamber may provide an independently controlled pressure stage, while appropriately sized apertures are provided at the boundaries between adjacent chambers to define a pathway for ions to travel through the ion processing section 1408 from one chamber to the next chamber. Any of the chambers may include one or more ion guides, ion optics, etc. Any of the ion guides may be configured according to any of the embodiments disclosed herein. For example, an ion guide as disclosed herein may be positioned just downstream of the ion source 1404 to receive ions outputted from the ion source 1404.

In some embodiments the mass analyzer 1412 in combination with the ion processing section 1408 (or a portion thereof) may form a tandem MS (MS/MS or $MS^n$) system. As an example, the ion processing section 1408 may include a first mass analyzing stage followed by a fragmentation stage. The first mass analyzing stage may include a multipole ion guide, which may be configured as a (typically quadrupole) mass filter for selecting ions of a specific m/z ratio or m/z ratio range. The fragmentation stage may include another multipole ion guide, which may be configured as a non-mass-resolving, RF-only collision cell for producing fragment ions by collision-induced dissociation (CID) as appreciated by persons skilled in the art. The mass analyzer 1412 in the case functions as the second or final mass analyzing stage. Thus, in some embodiments the MS system 1400 may be considered as including a QqQ, qTOF, or QqTOF instrument.

In Figure 14, the computing device 1420 may schematically represent one or more modules (or units, or components) configured for controlling, monitoring and/or timing various functional aspects of the MS system 1400 such as performed by, for example, the ion source 1404, one or more components of the ion processing section 1408, the mass analyzer 1412, and the ion detector 1416, as well as any vacuum pumps, ion optics, upstream LC or GC instrument, sample introduction device, etc., that may be provided in the MS system 1400 but not specifically shown in Figure 14. One or more modules (or units, or components) may be, or be embodied in, for example, a desktop computer, laptop computer, portable computer, tablet computer, handheld computer, mobile computing device, personal digital assistant (PDA), smartphone, etc. The computing device 1420 may also schematically represent all voltage sources not specifically shown, as well as timing controllers, clocks, frequency/waveform generators and the like as needed for applying voltages to various components of the MS system 1400. In particular, the computing device 1420 may be configured for controlling the voltages applied to ion guides as disclosed herein. The computing device 1420 may also be configured for receiving the ion detection signals from the ion detector 1416 and performing tasks relating to data acquisition and signal analysis as necessary to generate chromatograms, drift spectra, and mass (m/z ratio) spectra characterizing the sample under analysis. The computing device 1420 may also be configured for providing and controlling a user interface that provides screen displays of spectrometric data and other data with which a user may interact. The computing device 1420 may include one or more reading devices on or in which a tangible computer-readable (machine-readable) medium may be loaded that includes instructions for performing all or part of any of the methods disclosed herein. For all such purposes, the computing device 1420 may be in signal communication with various components of the MS system 1400 via wired or wireless communication links (as partially represented, for example, by dashed lines in Figure 14). Also for these purposes, the computing device 1420 may include one or more types of hardware, firmware and/or software, as well as one or more memories and databases.

It will be understood that the MS system 1400 just described may be re-configured as an IM system or an IM-MS system. In the case of an IM system, an IM drift cell may be substituted for the mass analyzer 1412. In the case of an IM-MS system, ion processing section 1408 may be or include an IM drift cell.

EXEMPLARY EMBODIMENTS

Exemplary embodiments provided in accordance with the presently disclosed subject matter include, but are not limited to, the following:

1. An ion guide, comprising: an entrance end; an exit end at a distance from the entrance end along a guide axis; and a plurality of guide electrodes surrounding the guide axis and configured for generating a radio frequency (RF) field of 2Nth azimuthal order wherein N is an integer equal to or greater than 2, and wherein the RF field is effective for radially confining ions to an ion beam along the guide axis, and the RF field has an effective potential having a magnitude on the guide axis that is independent of axial position along the guide axis.

2. An ion guide, comprising: an entrance end; an exit end at a distance from the entrance end along a guide axis; and a plurality of guide electrodes surrounding the guide axis and axially spaced from each other along the guide axis from the entrance end to the exit end, each guide electrode comprising 2N segments where N is an integer equal to or greater than 2, wherein the segments of each guide electrode are spaced from each other around the guide axis by transverse gaps.

3. The ion guide of embodiment 2, wherein the segments of each guide electrode are curved and oriented convex-out relative to the guide axis, or are curved and oriented convex-in relative to the guide axis, or are straight.

4. An ion guide, comprising: an entrance end; an exit end at a distance from the entrance end along a guide axis; a plurality of helical electrodes, each helical electrode comprising a first electrode end and a second electrode end, and extending from the first electrode end to the second electrode end through a plurality of turns surrounding the guide axis, wherein: the plurality of helical electrodes is 2N where N is an integer equal to or greater than 2; the first electrode end of at least one of the helical electrodes is positioned at the entrance end; and the second electrode end of at least one of the helical electrodes is positioned at the exit end.

5. The ion guide of embodiment 4, wherein, for each helical electrode, adjacent turns are separated by a lead spacing along the guide axis; and the helical electrodes are interleaved such that the lead spacing of each helical electrode contains a turn of each of the other helical electrodes.

6. The ion guide of embodiment 1, wherein the guide electrodes are axially spaced from each other along the guide axis from the entrance end to the exit end, each guide electrode comprises 2N segments, and the segments of each guide electrode are arc-shaped and circumferentially spaced from each other about the guide axis by gaps.

7. The ion guide of any of embodiments 2, 3 or 6, comprising a voltage source configured for applying to the guide electrodes a first RF voltage and a second RF voltage 180 degrees out of phase with the first RF voltage, wherein the voltage source communicates with the segments such that: for each guide electrode, the first RF voltage and the second RF voltage are alternately applied to transversely adjacent segments; and the first RF voltage and the second RF voltage are alternately applied to adjacent segments of respective adjacent guide electrodes.

8. The ion guide of any of embodiments 2, 3 or 6, comprising a voltage source configured for:

applying to the guide electrodes a first RF voltage, a second RF voltage 360/N degrees out of phase with the first RF voltage, a third RF voltage 2*360/N degrees out of phase with the first RF voltage, and so on up to an Nth RF voltage (N-1)*360/N degrees out of phase with the first voltage,

and in addition in the case that N is odd, an (N+1)th RF voltage 0.5*360/N degrees out of phase with the first RF voltage, an (N+2)th RF voltage (1+0.5)*360/N degrees out of phase with the first RF voltage, and so on up to a 2Nth RF voltage (2N+0.5)*360/N degrees out of phase with the first RF voltage,

wherein the voltage source communicates with the segments such that:

for each guide electrode, the first RF voltage is applied to an electrode segment, the second RF voltage is applied to the next transversely adjacent segment, the third RF voltage is applied to the next transversely adjacent segment, and so on to the Nth RF voltage, and then the first RF voltage is applied to the next transversely adjacent segment, and the second RF voltage is applied to the next transversely adjacent segment, and so forth; and

either the first RF voltage and the (N/2+1)th RF voltage in the case N is even or the first RF voltage and the (N+1)th RF voltage in the case N is odd, are alternately applied to axially adjacent segments of respective adjacent guide electrodes, or the first RF voltage is applied to one segment, the second RF voltage is applied to the next axially adjacent segment, the third RF voltage is applied to the next axially adjacent segment, and so forth, until the Nth RF voltage is applied in the case N is even or the 2Nth RF voltage is applied in the case N is odd, at which point the sequence repeats.

9. The ion guide of any of the preceding embodiments, comprising a plurality of elongated electrodes positioned at a greater radial distance from the guide axis than the guide electrodes.

10. The ion guide of embodiment 9, wherein each elongated electrode is radially aligned with a respective gap.

11. The ion guide of embodiment 9 or 10, comprising a voltage source configured for applying a DC potential to the elongated electrodes.

12. The ion guide of any of the preceding embodiments, wherein the guide electrodes have respective inside diameters that are substantially constant along the guide axis from the entrance end to the exit end.

13. The ion guide of any of the preceding embodiments, wherein the guide electrodes have respective inside diameters that are successively reduced along the guide axis from the entrance end to the exit end, such that the guide electrodes surround a guide volume that converges in a direction toward the exit end.

14. The ion guide of any of the preceding embodiments, comprising a cylindrical section and a funnel section upstream or downstream of the cylindrical section, wherein: in the cylindrical section, the guide electrodes have respective inside diameters that are substantially constant along the guide axis; and in the funnel section, the guide electrodes have respective inside diameters that are successively reduced along the guide axis in a direction toward the exit end.

15. The ion guide of any of the preceding embodiments, comprising an electrically conductive shroud surrounding the guide electrodes.

16. The ion guide of any of the embodiments 1 or 9 to 15, wherein the guide electrodes are helical electrodes, each helical electrode comprising a first electrode end and a second electrode end, and extending from the first electrode end to the second electrode end through a plurality of turns surrounding the guide axis, and wherein: the plurality of helical electrodes is 2N; the first electrode end of at least one of the helical electrodes is positioned at the entrance end, the second electrode end of at least one of the helical electrodes is positioned at the exit end; for each helical electrode, adjacent turns are separated by a lead spacing along the guide axis; and the helical electrodes are interleaved such that the lead spacing of each helical electrode contains a turn of each of the other helical electrodes.

17. The ion guide of embodiment 16, wherein the turns of the helical electrodes have respective inside diameters that are substantially constant along the guide axis from the entrance end to the exit end.

18. The ion guide of embodiment 16, wherein the turns of the helical electrodes have respective inside diameters that are successively reduced along the guide axis from the entrance end to the exit end, such that the helical electrodes surround a guide volume that converges in a direction toward the exit end.

19. The ion guide of embodiment 16, comprising a cylindrical section and a funnel section upstream or downstream of the cylindrical section, wherein: in the cylindrical section, the turns of the helical electrodes have respective inside diameters that are substantially constant along the guide axis; and in the funnel section, the turns of the helical electrodes have respective inside diameters that are successively reduced along the guide axis in a direction toward the exit end.

20. The ion guide of any of embodiments 4, 5, or 16 to 19, comprising a voltage source configured for applying to the helical electrodes a first RF voltage and a second RF voltage 180 degrees out of phase with the first RF voltage, wherein the voltage source communicates with the helical electrodes such that the first RF voltage and the second RF voltage are alternately applied to adjacent helical electrodes.

21. The ion guide of any of embodiments 4, 5, or 16 to 19, comprising a voltage source configured for applying the RF field comprises applying a first RF voltage and a second RF voltage 360/N degrees out of phase with the first RF voltage, and a third RF voltage 2*360/N degrees out of phase with the first voltage, and so on up to an Nth RF voltage (N-1)*360/N degrees out of phase with the first RF voltage, and

wherein the voltage source communicates with the helical electrodes such that the first RF voltage is applied to a first helical electrode, the second RF voltage is applied to a second adjacent helical electrode, the third RF voltage is applied to a third adjacent helical electrode, and so on until the Nth RF voltage is applied to an Nth adjacent helical electrode, and the first RF voltage is then applied to the subsequent adjacent helical electrode after the Nth adjacent helical electrode.

22. The ion guide of any of embodiments 4, 5, or 16 to 21, comprising an electrically conductive shroud surrounding the guide electrodes.

23. The ion guide of any of embodiments 4, 5, or 16 to 22, wherein each turn of the helical electrodes is separated from an adjacent turn by a pitch along the guide axis, and the pitch is substantially constant along the guide axis from the entrance end to the exit end.

24. The ion guide of any of embodiments 4, 5, or 16 to 22, wherein each turn of the helical electrodes is separated from an adjacent turn by a pitch along the guide axis, and the pitch varies along the guide axis from the entrance end to the exit end.

25. The ion guide of any of embodiments 4, 5, or 16 to 24, wherein the helical electrodes are configured such that at least a portion of the guide axis is curved.

26. The ion guide of any of the preceding embodiments, comprising an RF voltage source configured for applying an RF voltage to the guide electrodes effective for generating the RF field.

27. A spectrometer, comprising: the ion guide of any of the preceding embodiments; and an ion detector downstream from the ion guide.

28. The spectrometer of embodiment 27, comprising a component selected from the group consisting of: an ion source upstream of the ion guide; a mass analyzer downstream or upstream from the ion guide; an ion mobility drift cell downstream or upstream from the ion guide; an ion mobility drift cell comprising the ion guide; an RF voltage source configured for applying an RF voltage to the guide electrodes effective for generating the RF field; and a combination of two or more of the foregoing.

29. A method for guiding ions, the method comprising: transmitting ions through an ion guide comprising an entrance end, an exit end at a distance from the entrance end along a guide axis, and a plurality of guide electrodes surrounding a guide volume between the entrance end and the exit end; and while transmitting the ions, applying a radio frequency (RF) field of Nth order to the ions where N is an integer equal to or greater than 2, wherein the RF field radially confines the ions to an ion beam along the guide axis, and an effective potential of the RF field has a magnitude on the guide axis that is independent of axial position along the guide axis.

30. The method of embodiment 29, wherein the effective potential is substantially zero on the guide axis along an entire axial length of the ion guide.

31. The method of embodiment 29 or 30, comprising applying the RF field such that ion beam is concentrated in a converging manner along at least a portion of the ion guide.

32. The method of any of embodiments 29 to 31, comprising applying a direct current (DC) voltage to a shroud surrounding the guide electrodes, or to a plurality of elongated electrodes positioned at a greater radial distance from the guide axis than the guide electrodes, or to both of the foregoing.

33. The method of any of embodiments 29 to 32, wherein the guide electrodes are axially spaced from each other along the guide axis from the entrance end to the exit end, each guide electrode comprising 2N segments where N is an integer equal to or greater than 2, wherein the segments of each guide electrode are spaced from each other around the guide axis by transverse gaps.

34. The method of embodiment 33, wherein applying the RF field comprises applying a first RF voltage and a second RF voltage 180 degrees out of phase with the first RF voltage, and wherein for each guide electrode, the RF first voltage and the second RF voltage are alternately applied to transversely adjacent segments, and the first RF voltage and the second RF voltage are alternately applied to adjacent segments of respective adjacent guide electrodes.

35. The method of embodiment 33, wherein applying the RF field comprises:

applying a first RF voltage, a second RF voltage 360/N degrees out of phase with the first RF voltage, a third RF voltage 2*360/N degrees out of phase with the first voltage, and so on up to an Nth RF voltage (N-1)*360/N degrees out of phase with the first voltage,

and in addition in the case that N is odd, an (N+1)th RF voltage 0.5*360/N degrees out of phase with the first RF voltage, an (N+2)th RF voltage (1+0.5)*360/N degrees out of phase with the first RF voltage, and so on up to a 2Nth RF voltage (2N+0.5)*360/N degrees out of phase with the first RF voltage,

and wherein for each guide electrode, the RF first voltage is applied to an electrode segment, the second RF voltage is applied to a transversely adjacent segments, the third RF voltage is applied to the next transversely adjacent segment, and so on until the Nth RF voltage is applied to the (N-1)th transversely adjacent segment, and then the first RF voltage is applied to the next transversely adjacent segment, which is diametrically opposed to the first segment, and so on again until the Nth RF voltage is applied to the final segment which is in turn transversely adjacent to the first segment; and

either the first voltage and the (N/2+1)th voltage in the case N is even, or the first voltage and the (N+1)th voltage in the case N is odd, are alternately applied to adjacent segments of respective adjacent guide electrodes, or the first voltage RF voltage is applied to the next (2nd) segment axially separated from the first, the third RF voltage if it exists is applied to the 3rd segment axially separated from the first, and so on until all RF voltages are exhausted, and the pattern repeats again starting with the first RF voltage.

36. The method of any of embodiments 29 to 32, wherein the guide electrodes are helical electrodes extending through a plurality of turns surrounding the guide axis, and the number of helical electrodes is 2N where N is an integer equal to or greater than 2.

37. The method of embodiment 36, wherein applying the RF field comprises applying a first RF voltage and a second RF voltage 180 degrees out of phase with the first RF voltage, and wherein the first RF voltage and the second RF voltage are alternately applied to adjacent helical electrodes.

38. The method of embodiment 36, wherein applying the RF field comprises applying a first RF voltage and a second RF voltage 360/N degrees out of phase with the first RF voltage, and a third RF voltage 2*360/N degrees out of phase with the first voltage, and so on up to an Nth RF voltage (N-1)*360/N degrees out of phase with the first RF voltage, and wherein the first RF voltage is applied to a first helical electrode, the second RF voltage is applied to a second adjacent helical electrode, the third RF voltage is applied to a third adjacent helical electrode, and so on until the Nth RF voltage is applied to an Nth adjacent helical electrode,

and the first RF voltage is then applied to the subsequent adjacent helical electrode after the Nth adjacent helical electrode.

39. A spectrometer, configured for performing the method of any of embodiments 29 to 38.

It will be understood that the term "in signal communication" as used herein means that two or more systems, devices, components, modules, or sub-modules are capable of communicating with each other via signals that travel over some type of signal path. The signals may be communication, power, data, or energy signals, which may communicate information, power, or energy from a first system, device, component, module, or sub-module to a second system, device, component, module, or sub-module along a signal path between the first and second system, device, component, module, or sub-module. The signal paths may include physical, electrical, magnetic, electromagnetic, electrochemical, optical, wired, or wireless connections. The signal paths may also include additional systems, devices, components, modules, or sub-modules between the first and second system, device, component, module, or sub-module.

More generally, terms such as "communicate" and "in ... communication with" (for example, a first component "communicates with" or "is in communication with" a second component) are used herein to indicate a structural, functional, mechanical, electrical, signal, optical, magnetic, electromagnetic, ionic or fluidic relationship between two or more components or elements. As such, the fact that one component is said to communicate with a second component is not intended to exclude the possibility that additional components may be present between, and/or operatively associated or engaged with, the first and second components.

It will be understood that various aspects or details of the invention may be changed without departing from the scope of the invention. Furthermore, the foregoing description is for the purpose of illustration only, and not for the purpose of limitation-the invention being defined by the claims.

## Claims

1.  An ion guide (800; 850; 1000), comprising:

   an entrance end (808; 1008);
   an exit end (812; 1012) at a distance from the entrance end (808; 1008) along a guide axis; and
   a plurality of guide electrodes (816; 1016) surrounding the guide axis and configured for generating a radio frequency (RF) field of 2Nth azimuthal order wherein N is an integer equal to or greater than 2, and wherein the RF field is effective for radially confining ions to an ion beam along the guide axis, and the RF field has an effective potential having a magnitude on the guide axis that is independent of axial position along the guide axis.

2.  The ion guide (800; 850; 1000) of claim 1, wherein the guide electrodes (816) are axially spaced from each other along the guide axis from the entrance end (808) to the exit end (812), each guide electrode (816) comprises 2N segments (820), and the segments (820) of each guide electrode (816) are spaced from each other around the guide axis by transverse gaps (824).

3.  The ion guide (800; 850; 1000) of claim 2, comprising a voltage source configured for applying to the guide electrodes (816) a first RF voltage and a second RF voltage 180 degrees out of phase with the first RF voltage, wherein the voltage source communicates with the segments (820) such that:

   for each guide electrode (816), the first RF voltage and the second RF voltage are alternately applied to transversely adjacent segments (820); and
   the first RF voltage and the second RF voltage are alternately applied to adjacent segments (820) of respective adjacent guide electrodes (816).

4.  The ion guide (800; 850; 1000) of any of the preceding claims, comprising a plurality of elongated electrodes (828) having a configuration selected from the group consisting of: the elongated electrodes (828) are positioned at a greater radial distance from the guide axis than the guide electrodes (816; 1016); each elongated electrode (828) is radially aligned with a respective gap (824); and both of the foregoing.

5. The ion guide (800; 850; 1000) of any of the preceding claims, wherein the guide electrodes (816; 1016) have a configuration selected from the group consisting of:

the guide electrodes (816; 1016) have respective inside diameters that are substantially constant along the guide axis from the entrance end (808; 1008) to the exit end (812; 1012);.

the guide electrodes (816; 1016) have respective inside diameters that are successively reduced along the guide axis from the entrance end (808; 1008) to the exit end (812; 1012), such that the guide electrodes (816; 1016) surround a guide volume that converges in a direction toward the exit end (812; 1012); and.

the ion guide (800; 850; 1000) comprises a cylindrical section and a funnel section upstream or downstream of the cylindrical section wherein: in the cylindrical section, the guide electrodes (816; 1016) have respective inside diameters that are substantially constant along the guide axis; and in the funnel section, the guide electrodes (816; 1016) have respective inside diameters that are successively reduced along the guide axis in a direction toward the exit end (812; 1012).

6. The ion guide (800; 850; 1000) of any of the preceding claims, comprising an electrically conductive shroud (832) surrounding the guide electrodes (816; 1016).

7. The ion guide (800; 850; 1000) of any of claims 1 and 4 to 6, wherein the guide electrodes are helical electrodes (1016), each helical electrode (1016) comprising a first electrode end and a second electrode end, and extending from the first electrode end to the second electrode end through a plurality of turns surrounding the guide axis, and wherein:

the plurality of helical electrodes (1016) is 2N;
the first electrode end of at least one of the helical electrodes (1016) is positioned at the entrance end; and
the second electrode end of at least one of the helical electrodes (1016) is positioned at the exit end.

8. The ion guide (800; 850; 1000) of claim 7, wherein the helical electrodes (1016) have a configuration comprising at least of:

for each helical electrode (1016), adjacent turns are separated by a lead spacing along the guide axis, and the helical electrodes (1016) are interleaved such that the lead spacing of each helical electrode (1016) contains a turn of each of the other helical electrodes (1016);
each turn of the helical electrodes (1016) is separated from an adjacent turn by a pitch along the guide axis, and the pitch is substantially constant along the guide axis from the entrance end (1008) to the exit end (1012) or the pitch varies along the guide axis from the entrance end (1008) to the exit end (1012);
the helical electrodes (1016) are configured such that at least a portion of the guide axis is curved.

9. The ion guide (800; 850; 1000) of claim 7 or 8, comprising a voltage source configured for applying to the helical electrodes (1016) a first RF voltage and a second RF voltage 180 degrees out of phase with the first RF voltage, wherein the voltage source communicates with the helical electrodes (1016) such that the first RF voltage and the second RF voltage are alternately applied to adjacent helical electrodes (1016).

10. A spectrometer (1400), comprising:

the ion guide (800; 850; 1000) of any of the preceding claims; and
an ion detector (1416) downstream from the ion guide (800; 850; 1000).

11. A method for guiding ions, the method comprising:

transmitting ions through an ion guide (800; 850; 1000) comprising an entrance end (808; 1008), an exit end (812; 1012) at a distance from the entrance end (808; 1008) along a guide axis, and a plurality of guide electrodes (816; 1016) surrounding a guide volume between the entrance end (808; 1008) and the exit end (812; 1012); and while transmitting the ions, applying a radio frequency (RF) field of 2Nth azimuthal order to the ions where N is an integer equal to or greater than 2, wherein the RF field radially confines the ions to an ion beam along the guide axis, and an effective potential of the RF field has a magnitude on the guide axis that is independent of axial position along the guide axis.

12. The method of claim 11, wherein the effective potential is substantially zero on the guide axis along an entire axial length of the ion guide (800; 850; 1000).

13. The method of claim 11 or 12, comprising applying a direct current (DC) voltage to a shroud (832) surrounding the guide electrodes (816; 1016), or to a plurality of elongated electrodes (828) positioned at a greater radial distance from the guide axis than the guide electrodes (816; 1016), or to both of the foregoing.

14. The method of any of claims 11 to 13, wherein the guide electrodes (816; 1016) are axially spaced from each other along the guide axis from the entrance end (808) to the exit end (812), each guide electrode (816; 1016) comprising 2N segments (820) where N is an integer equal to or greater than 2, wherein the segments (820) of each guide electrode (816; 1016) are spaced from each other around the guide axis by transverse gaps (824).

15. The method of any of claims 11 to 13, wherein the guide electrodes are helical electrodes (1016) extending through a plurality of turns surrounding the guide axis, and the number of helical electrodes (1016) is 2N where N is an integer equal to or greater than 2.

FIG. 1

FIG. 2

FIG. 3

FIG. 4

FIG. 5

FIG. 6

FIG. 7

FIG. 8A

FIG. 8B

FIG. 8C

FIG. 9

FIG. 10

FIG. 11

FIG. 12

FIG. 13

FIG. 14

Europäisches
Patentamt

European
Patent Office

Office européen
des brevets

# EUROPEAN SEARCH REPORT

Application Number

EP 15 20 0885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/012017 A1 (NISHIGUCHI MASARU [JP]) 20 January 2011 (2011-01-20) * abstract * * figures 1,2,5,10 * | 1-6, 10-14 | INV. H01J49/06 |
| X | WO 2010/136779 A1 (MICROMASS LTD [GB]; KENNY DANIEL JAMES [GB]) 2 December 2010 (2010-12-02) * abstract * * figures 4,5 * | 1-6, 10-14 | |
| X | US 6 417 511 B1 (RUSS IV CHARLES W [US] ET AL) 9 July 2002 (2002-07-09) * abstract * * figure 5G * * column 7, line 42 - column 8, line 3 * | 1,5,7-9, 11,15 | |
| A | US 2013/206973 A1 (KOVTOUN VIATCHESLAV V [US] ET AL) 15 August 2013 (2013-08-15) * abstract * * figure 2 * | 1-15 | |
| A | US 2003/136905 A1 (FRANZEN JOCHEN [DE] ET AL) 24 July 2003 (2003-07-24) * abstract * * figures 4,7 * | 1-15 | TECHNICAL FIELDS SEARCHED (IPC) H01J |
| A | WO 2010/141776 A2 (VARIAN INC [US]; WANG MINGDA [US]) 9 December 2010 (2010-12-09) * abstract * * figure 16 * * paragraphs [0069], [0070] * | 1-15 | |

The present search report has been drawn up for all claims

| Place of search | Date of completion of the search | Examiner |
|---|---|---|
| The Hague | 13 April 2016 | Dietsche, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 038 134 A1

## ANNEX TO THE EUROPEAN SEARCH REPORT
## ON EUROPEAN PATENT APPLICATION NO.

EP 15 20 0885

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2016

| Patent document cited in search report | | Publication date | Patent family member(s) | | Publication date |
|---|---|---|---|---|---|
| US 2011012017 | A1 | 20-01-2011 | CN 102067273 A | | 18-05-2011 |
| | | | JP 5152320 B2 | | 27-02-2013 |
| | | | US 2011012017 A1 | | 20-01-2011 |
| | | | WO 2009110025 A1 | | 11-09-2009 |
| WO 2010136779 | A1 | 02-12-2010 | CA 2762836 A1 | | 02-12-2010 |
| | | | EP 2436026 A1 | | 04-04-2012 |
| | | | GB 2470664 A | | 01-12-2010 |
| | | | GB 2480949 A | | 07-12-2011 |
| | | | JP 5738850 B2 | | 24-06-2015 |
| | | | JP 2012528437 A | | 12-11-2012 |
| | | | US 2012280123 A1 | | 08-11-2012 |
| | | | US 2014166895 A1 | | 19-06-2014 |
| | | | WO 2010136779 A1 | | 02-12-2010 |
| US 6417511 | B1 | 09-07-2002 | NONE | | |
| US 2013206973 | A1 | 15-08-2013 | US 2013206973 A1 | | 15-08-2013 |
| | | | WO 2013122880 A2 | | 22-08-2013 |
| US 2003136905 | A1 | 24-07-2003 | GB 2389452 A | | 10-12-2003 |
| | | | US 2003136905 A1 | | 24-07-2003 |
| WO 2010141776 | A2 | 09-12-2010 | DE 112010002224 T5 | | 20-12-2012 |
| | | | JP 2012529156 A | | 15-11-2012 |
| | | | US 2010308218 A1 | | 09-12-2010 |
| | | | WO 2010141776 A2 | | 09-12-2010 |

EPO FORM P0459

For more details about this annex : see Official Journal of the European Patent Office, No. 12/82

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KELLY et al.** The ion funnel: Theory, implementations, and applications. *Mass Spectrom. Rev.,* 2010, vol. 29, 294-312